# EUROPEAN PATENT SPECIFICATION

(11) **EP 3 616 355 B1**
(45) Date of publication and mention of the grant of the patent: **10.08.2022**
(21) Application number: 18789858.0
(22) Date of filing: 23.04.2018
(51) Int. Cl.: H04L 9/08, H04L 67/1095

(54) **REPLICATION OF IDENTITY-DERIVED PRIMARY KEYS WITHOUT RANGE RESTRICTIONS**
REPLIKATION VON IDENTITÄTSABGELEITETEN PRIMÄRSCHLÜSSELN OHNE BEREICHSEINSCHRÄNKUNGEN
RÉPLICATION DE CLÉS PRIMAIRES DÉRIVÉES D'IDENTITÉ SANS RESTRICTIONS DE PORTÉE

(30) Priority: 28.04.2017 US 201715582161
(43) Date of publication of application: 04.03.2020
(73) Proprietor: Honeywell International Inc., Morris Plains, NJ 07950 (US)
(72) Inventor: MESIC, Thomas M., Morris Plains, New Jersey 07950 (US); VELAGAPALLI, Arun, Morris Plains, New Jersey 07950 (US)
(74) Representative: Houghton, Mark Phillip
(86) International application number: PCT/US2018/028880
(87) International publication number: WO 2018/200385

(56) References cited:
- EP-A2- 1 450 270
- US-A1- 2005 080 827
- US-A1- 2011 320 400
- US-A1- 2014 310 293
- US-A1- 2015 032 695
- US-A1- 2017 093 755
- US-B2- 7 330 851
- DESSISLAVA PETROVA-ANTONOVA ET AL: "Approach for data replication on MS SQL Server", COMPUTER SYSTEMS AND TECHNOLOGIES AND WORKSHOP FOR PHD STUDENTS IN COMPUTING, ACM, 2 PENN PLAZA, SUITE 701 NEW YORK NY 10121-0701 USA, 18 June 2009 (2009-06-18), pages 1-8, XP058164098, ISSN: 1313-8936, DOI: 10.1145/1731740.1731768 ISBN: 978-1-60558-986-2

## Description

### TECHNICAL FIELD

This disclosure relates generally to network security. More specifically, this disclosure relates to an apparatus and method for data publishing and replication, including but not limited to use in cyber-security systems.

### BACKGROUND

Processing facilities are often managed using industrial process control and automation systems. Conventional control and automation systems routinely include a variety of networked devices, such as servers, workstations, switches, routers, firewalls, safety systems, proprietary real-time coniroliers, and industrial field devices. Often times, tins equipment comes from a number of different vendors. In industrial environments, cyber-security is of increasing concern, and unaddressed security vulnerabilities in any of these components could be exploited by attackers to disrupt operations or cause unsafe conditions in an industrial facility. To detect or report a threat, it is often useful to efficiently publish data from database tables. US 7,330,851 B2 relates to a technique for providing data security through the removal of elements of a database table, be they the data fields themselves, or structural components, such as connection information that defines how, for example, the elements of a database are structured.

### SUMMARY

The invention is defined by claims 1, 7 and 13.

This disclosure provides an apparatus and method for replication of identity-derived primary keys without range restrictions. A method includes maintaining, by a publisher system, a data table associated with a primary key PK-i. The method includes adding, by the publisher system, a unique value PK-g associated with every record of the data table. The method includes defining, by the publisher system, a primary key PK based on PK-i and PK-g. The method includes publishing the data table, including the primary key PK, by the publisher system, to at least one subscriber system.

Disclosed embodiments include a publisher system comprising a controller and a memory, configured to perform processes as described herein. Disclosed embodiments also include a non-transitory machine-readable medium encoded with executable instructions that, when executed, cause one or more processors of a publisher system to perform processes as disclosed herein.

In various embodiments, the publisher system includes multiple data tables, each data table associated with a different primary key PK-i and associated with the same unique value PK-g. In various embodiments, multiple publisher systems each maintain a data table associated with primary key PK-i, and add different unique values PK-g. In various embodiments, PK-i and PK-g are maintained as columns in the data table. In various embodiments, the primary key PK-i is an integer-derived data type. In various embodiments, PK-g uniquely identifies the publisher. In various embodiments, the publisher system removes any identity attribute associated with the data table.

Other technical features may be readily apparent to one skilled in the art from the following figures, descriptions, and claims.

### BRIEF DESCRIPTION OF THE DRAWINGS

For a more complete understanding of this disclosure, reference is now made to the following description, taken in conjunction with the accompanying drawings, in which:
FIGURE 1 illustrates an example industrial process control and automation system according to this disclosure;
FIGURE 2 illustrates publishing and replication of data in accordance with disclosed embodiments; and
FIGURE 3 illustrates a process in accordance with disclosed embodiments.

### DETAILED DESCRIPTION

The figures, discussed below, and the various embodiments used to describe the principles of the present invention in this patent document are by way of illustration only and should not be construed in any way to limit the scope of the invention. Those skilled in the art will understand that the principles of the invention may be implemented in any type of suitably arranged device or system.

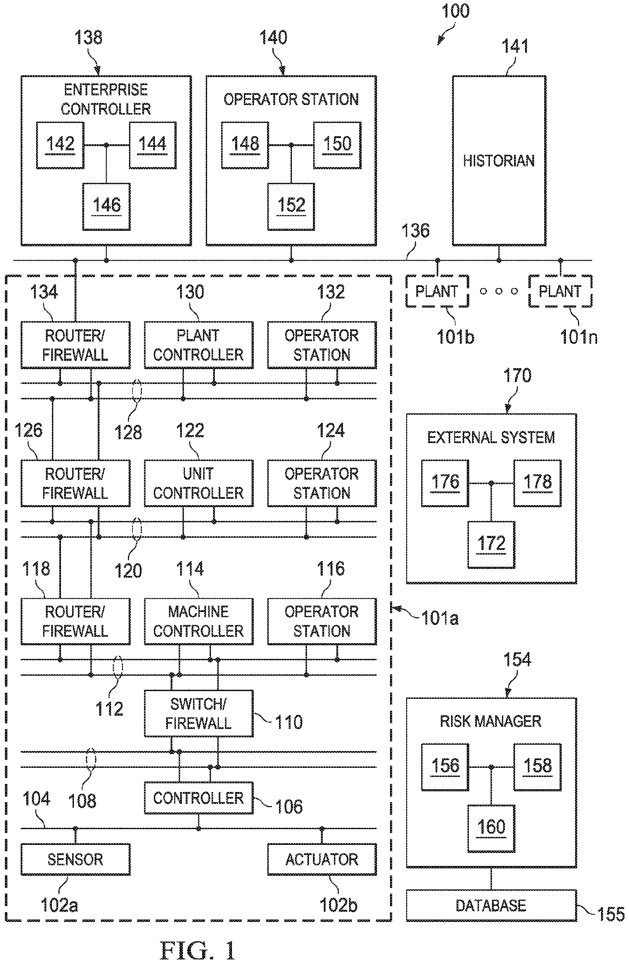

Figure 1 illustrates an example industrial process control and automation system 100 according to this disclosure. As shown in Figure 1, the system 100 includes various components that facilitate production or processing of at least one product or other material. For instance, the system 100 is used here to facilitate control over components in one or multiple plants 101a-101n. Each plant 101a-101n represents one or more processing facilities (or one or more portions thereof), such as one or more manufacturing facilities for producing at least one product or other material. In general, each plant 101a-101n may implement one or more processes and can individually or collectively be referred to as a process system. A process system generally represents any system or portion thereof configured to process one or more products or other materials in some manner.

In Figure 1, the system 100 is implemented using the Purdue model of process control. In the Purdue model, "Level 0" may include one or more sensors 102a and one or more actuators 102b. The sensors 102a and actuators 102b represent components in a process system that may perform any of a wide variety of functions. For example, the sensors 102a could measure a wide variety of characteristics in the process system, such as temperature, pressure, or flow rate. Also, the actuators 102b could alter a wide variety of characteristics in the process system. The sensors 102a and actuators 102b could represent any other or additional components in any suitable process system. Each of the sensors 102a includes any suitable structure for measuring one or more characteristics in a process system. Each of the actuators 102b includes any suitable structure for operating on or affecting one or more conditions in a process system.

At least one network 104 is coupled to the sensors 102a and actuators 102b. The network 104 facilitates interaction with the sensors 102a and actuators 102b. For example, the network 104 could transport measurement data from the sensors 102a and provide control signals to the actuators 102b. The network 104 could represent any suitable network or combination of networks. As particular examples, the network 104 could represent an Ethernet network, an electrical signal network (such as a HART or FOUNDATION FIELDBUS network), a pneumatic control signal network, or any other or additional type(s) of network(s).

In the Purdue model, "Level 1" may include one or more controllers 106, which are coupled to the network 104. Among other things, each controller 106 may use the measurements from one or more sensors 102a to control the operation of one or more actuators 102b. For example, a controller 106 could receive measurement data from one or more sensors 102a and use the measurement data to generate control signals for one or more actuators 102b. Each controller 106 includes any suitable structure for interacting with one or more sensors 102a and controlling one or more actuators 102b. Each controller 106 could, for example, represent a proportional-integral-derivative (PID) controller or a multi variable controller, such as a Robust Multivariable Predictive Control Technology (RMPCT) controller or other type of controller implementing model predictive control (MPC) or other advanced predictive control (APC). As a particular example, each controller 106 could represent a computing device running a real-time operating system.

Two networks 108 are coupled to the controllers 106. The networks 108 facilitate interaction with the controllers 106, such as by transporting data to and from the controllers 106. The networks 108 could represent any suitable networks or combination of networks. As a particular example, the networks 108 could represent a redundant pair of Ethernet networks, such as a FAULT TOLERANT ETHERNET (FTE) network from HONEYWELL INTERNATIONAL INC.

At least one switch/firewall 110 couples the networks 108 to two networks 112. The switch/firewall 110 may transport traffic from one network to another. The switch/firewall 110 may also block traffic on one network from reaching another network. The switch/firewall 110 includes any suitable structure for providing communication between networks, such as a HONEYWELL CONTROL FIREWALL (CF9) device. The networks 112 could represent any suitable networks, such as an FTE network.

In the Purdue model, "Level 2" may include one or more machine-level controllers 114 coupled to the networks 112. The machine-level controllers 114 perform various functions to support the operation and control of the controllers 106, sensors 102a, and actuators 102b, which could be associated with a particular piece of industrial equipment (such as a boiler or other machine). For example, the machine-level controllers 114 could log information collected or generated by the controllers 106, such as measurement data from the sensors 102a or control signals for the actuators 102b. The machine-level controllers 114 could also execute applications that control the operation of the controllers 106, thereby controlling the operation of the actuators 102b. In addition, the machine-level controllers 114 could provide secure access to the controllers 106. Each of the machine-level controllers 114 includes any suitable structure for providing access to, control of, or operations related to a machine or other individual piece of equipment. Each of the machine-level controllers 114 could, for example, represent a server computing device running a MICROSOFT WINDOWS operating system. Although not shown, different machine-level controllers 114 could be used to control different pieces of equipment in a process system (where each piece of equipment is associated with one or more controllers 106, sensors 102a, and actuators 102b).

One or more operator stations 116 are coupled to the networks 112. The operator stations 116 represent computing or communication devices providing user access to the machine-level controllers 114, which could then provide user access to the controllers 106 (and possibly the sensors 102a and actuators 102b). As particular examples, the operator stations 116 could allow users to review the operational history of the sensors 102a and actuators 102b using information collected by the controllers 106 and/or the machine-level controllers 114. The operator stations 116 could also allow the users to adjust the operation of the sensors 102a, actuators 102b, controllers 106, or machine-level controllers 114. In addition, the operator stations 116 could receive and display warnings, alerts, or other messages or displays generated by the controllers 106 or the machine-level controllers 114. Each of the operator stations 116 includes any suitable structure for supporting user access and control of one or more components in the system 100. Each of the operator stations 116 could, for example, represent a computing device running a MICROSOFT WINDOWS operating system.

At least one router/firewall 118 couples the networks 112 to two networks 120. The router/firewall 118 includes any suitable structure for providing communication between networks, such as a secure router or combination router/firewall. The networks 120 could represent any suitable networks, such as an FTE network.

In the Purdue model, "Level 3" may include one or more unit-level controllers 122 coupled to the networks 120. Each unit-level controller 122 is typically associated with a unit in a process system, which represents a collection of different machines operating together to implement at least part of a process. The unit-level controllers 122 perform various functions to support the operation and control of components in the lower levels. For example, the unit-level controllers 122 could log information collected or generated by the components in the lower levels, execute applications that control the components in the lower levels, and provide secure access to the components in the lower levels. Each of the unit-level controllers 122 includes any suitable structure for providing access to, control of, or operations related to one or more machines or other pieces of equipment in a process unit. Each of the unit-level controllers 122 could, for example, represent a server computing device running a MICROSOFT WINDOWS operating system. Although not shown, different unit-level controllers 122 could be used to control different units in a process system (where each unit is associated with one or more machine-level controllers 114, controllers 106, sensors 102a, and actuators 102b).

Access to the unit-level controllers 122 may be provided by one or more operator stations 124. Each of the operator stations 124 includes any suitable structure for supporting user access and control of one or more components in the system 100. Each of the operator stations 124 could, for example, represent a computing device running a MICROSOFT WINDOWS operating system.

At least one router/firewall 126 couples the networks 120 to two networks 128. The router/firewall 126 includes any suitable structure for providing communication between networks, such as a secure router or combination router/firewall. The networks 128 could represent any suitable networks, such as an FTE network.

In the Purdue model, "Level 4" may include one or more plant-level controllers 130 coupled to the networks 128. Each plant-level controller 130 is typically associated with one of the plants 101a-101n, which may include one or more process units that implement the same, similar, or different processes. The plant-level controllers 130 perform various functions to support the operation and control of components in the lower levels. As particular examples, the plant-level controller 130 could execute one or more manufacturing execution system (MES) applications, scheduling applications, or other or additional plant or process control applications. Each of the plant-level controllers 130 includes any suitable structure for providing access to, control of, or operations related to one or more process units in a process plant. Each of the plant-level controllers 130 could, for example, represent a server computing device running a MICROSOFT WINDOWS operating system.

Access to the plant-level controllers 130 may be provided by one or more operator stations 132. Each of the operator stations 132 includes any suitable structure for supporting user access and control of one or more components in the system 100. Each of the operator stations 132 could, for example, represent a computing device running a MICROSOFT WINDOWS operating system.

At least one router/firewall 134 couples the networks 128 to one or more networks 136. The router/firewall 134 includes any suitable structure for providing communication between networks, such as a secure router or combination router/firewall. The network 136 could represent any suitable network, such as an enterprise-wide Ethernet or other network or all or a portion of a larger network (such as the Internet).

In the Purdue model, "Level 5" may include one or more enterprise-level controllers 138 coupled to the network 136. Each enterprise-level controller 138 is typically able to perform planning operations for multiple plants 101a-101n and to control various aspects of the plants 101a-101n. The enterprise-level controllers 138 can also perform various functions to support the operation and control of components in the plants 101a-101n. As particular examples, the enterprise-level controller 138 could execute one or more order processing applications, enterprise resource planning (ERP) applications, advanced planning and scheduling (APS) applications, or any other or additional enterprise control applications. Each of the enterprise-level controllers 138 includes any suitable structure for providing access to, control of, or operations related to the control of one or more plants. Each of the enterprise-level controllers 138 could, for example, represent a server computing device running a MICROSOFT WINDOWS operating system. In this document, the term "enterprise" refers to an organization having one or more plants or other processing facilities to be managed. Note that if a single plant 101a is to be managed, the functionality of the enterprise-level controller 138 could be incorporated into the plant-level controller 130.

Access to the enterprise-level controllers 138 may be provided by one or more operator stations 140. Each of the operator stations 140 includes any suitable structure for supporting user access and control of one or more components in the system 100. Each of the operator stations 140 could, for example, represent a computing device running a MICROSOFT WINDOWS operating system.

Various levels of the Purdue model can include other components, such as one or more databases. The database(s) associated with each level could store any suitable information associated with that level or one or more other levels of the system 100. For example, a historian 141 can be coupled to the network 136. The historian 141 could represent a component that stores various information about the system 100. The historian 141 could, for instance, store information used during production scheduling and optimization. The historian 141 represents any suitable structure for storing and facilitating retrieval of information. Although shown as a single centralized component coupled to the network 136, the historian 141 could be located elsewhere in the system 100, or multiple historians could be distributed in different locations in the system 100.

In particular embodiments, the various controllers and operator stations in Figure 1 may represent computing devices. For example, each of the controllers 106, 114, 122, 130, 138 could include one or more processing devices 142 and one or more memories 144 for storing instructions and data used, generated, or collected by the processing device(s) 142. Each of the controllers 106, 114, 122, 130, 138 could also include at least one network interface 146, such as one or more Ethernet interfaces or wireless transceivers. Also, each of the operator stations 116, 124, 132, 140 could include one or more processing devices 148 and one or more memories 150 for storing instructions and data used, generated, or collected by the processing device(s) 148. Each of the operator stations 116, 124, 132, 140 could also include at least one network interface 152, such as one or more Ethernet interfaces or wireless transceivers.

As noted above, cyber-security is of increasing concern with respect to industrial process control and automation systems. Database tables are commonly designed with integer-derived data type columns that function as primary keys (PK). These PKs often have the 'Identity' attribute applied to them whereby the Identity attribute instructs the Relational Database Management System (RDBMS) to ensure that all records added to a particular table automatically have a unique PK value assigned. Data replication of identity-based PKs requires that each publisher and subscriber participating in the replication process utilize a specific, unique range of values. By dividing the total number of unique values, supported by the data type, into ranges, the total number of values available to each participant becomes less than the maximum number of unique values defined for that particular data type. Also, in some instances, designating these unique ranges becomes a manual process as new participants (i.e. subscribers or publishers) come online to participate in the data replication process.

Disclosed embodiments include systems and methods that eliminate the need to perform range management and therefore eliminate the reduction of unique values available to any one subscriber or publisher. This allows each participant to use the complete set of values afforded by the particular integer-derived data type selected.

Disclosed embodiments can be used in conjunction with commercial software and services, including but not limited to the HONEYWELL Industrial Enterprise Risk Manager (ERM) software application, acting as the data replication subscriber, and the commercially available HONEYWELL Industrial Cybersecurity Risk Manager (RM) software application, to act as a data replication publisher.

The processes and results described herein can be accomplished (among other ways) using a risk manager 154. Among other things, the risk manager 154 supports a technique for replication of identity-derived primary keys without range restrictions.

In this example, the risk manager 154 includes one or more processing devices 156; one or more memories 158 for storing instructions and data used, generated, or collected by the processing device(s) 156; and at least one network interface 160. Each processing device 156 could represent a microprocessor, microcontroller, digital signal process, field programmable gate array, application specific integrated circuit, or discrete logic. Each memory 158 could represent a volatile or non-volatile storage and retrieval device, such as a random access memory or Flash memory. Each network interface 160 could represent an Ethernet interface, wireless transceiver, or other device facilitating external communication. The functionality of the risk manager 154 could be implemented using any suitable hardware or a combination of hardware and software/firmware instructions. In some embodiments, the risk manager 154 includes, or is communication with, a database 155. The database 155 denotes any suitable structure facilitating storage and retrieval of information.

Disclosed embodiments enable the efficient publishing of risk manager data from a system such as the risk manager 154. The analysis and reporting can also or alternatively be accessed or performed, in some cases, by an external system 170. In this example, the external system 170 includes one or more processing devices 176; one or more memories 178 for storing instructions and data used, generated, or collected by the processing device(s) 176; and at least one network interface 172. Each processing device 176 could represent a microprocessor, microcontroller, digital signal process, field programmable gate array, application specific integrated circuit, or discrete logic. Each memory 178 could represent a volatile or non-volatile storage and retrieval device, such as a random access memory or Flash memory. Each network interface 172 could represent an Ethernet interface, wireless transceiver, or other device facilitating external communication. The functionality of the external system 170 could be implemented using any suitable hardware or a combination of hardware and software/firmware instructions. The external system 170 can be, for example, a stand-alone data processing system, a mobile device, an external server or enterprise system, or otherwise. The exemplary structure of the external system 170 described above is not intended to limit the structure or function of the devices that could be used to implement the external system 170. In specific embodiments, one or more external systems 170 act as the "subscribers" to which data is to be published as described herein.

Although Figure 1 illustrates one example of an industrial process control and automation system 100, various changes may be made to Figure 1. For example, a control and automation system could include any number of sensors, actuators, controllers, servers, operator stations, networks, risk managers, and other components. Also, the makeup and arrangement of the system 100 in Figure 1 is for illustration only. Components could be added, omitted, combined, or placed in any other suitable configuration according to particular needs. Further, particular functions have been described as being performed by particular components of the system 100. This is for illustration only. In general, control and automation systems are highly configurable and can be configured in any suitable manner according to particular needs. In addition, Figure 1 illustrates an example environment in which the functions of the risk manager 154 can be used. This functionality can be used in any other suitable device or system.

In many systems, replicating identity-based primary keys requires manual range management. Manually defining and adjusting the range of values available for subscribers and publishers participating in the replication process imparts a greater degree of user intervention where deploying and managing the software application is concerned. This results in a less automated experience for the administrator of those applications, requiring more training and more expert knowledge.

Disclosed embodiments, by contrast, eliminate the need to perform any range management. Therefore, the practice of having to manage the software applications participating in the data replication process is reduced in scope. Reducing the degree to which a software application must be managed and administered in order to participate within a replicating system of publishers and subscribers imparts a more seamless user experience and results in the system or device operating more efficiently.

As the number of publishers and subscribers participating in the data replication process grows, still no special range management is required. This is in contrast to systems that require range management in the first place and which may require a proportionally higher degree of management as the number of participating applications grow in number when compared to the system containing fewer participants.

The full set of unique values afforded by the particular integer-derived datatype chosen can be fully utilized in each data table by each participant. This thus allows the applications to carry out their normal designed functions, where data generation is concerned, for longer periods before any data archival process with subsequent recycling of the PKs becomes a necessity. These features improve the functioning of the device by lowering memory and archival requirements.

Other advantages include less management of installed software systems operating within a data replication environment resulting in a smaller total cost of ownership and longer operational times before data archival maintenance becomes a necessity.

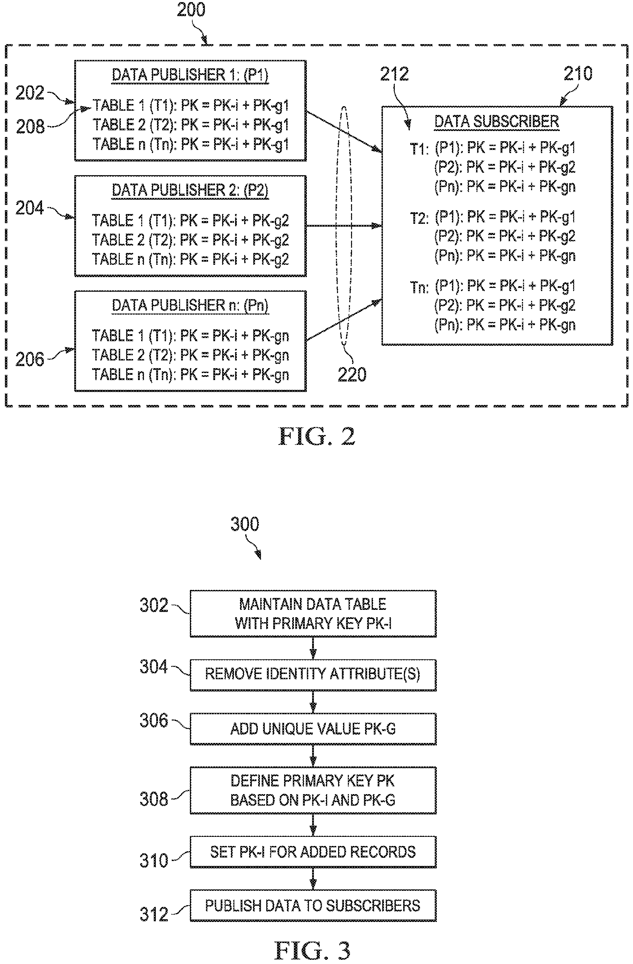

Figure 2 illustrates publishing and replication of data in accordance with disclosed embodiments.

In this example, system 200 can represent either a single data processing system (such as any of the systems or devices described above) running multiple applications or multiple data processing systems each running one or more applications.

The applications include a plurality n of publisher systems, such as data publisher 1 202, data publisher 2 204, and through data publisher n 206. Each publisher system maintains one or more data tables 208 of primary keys to be published to one or more subscriber systems 210. The subscriber systems 210 can be a separate data processing system from the publisher data processing system(s), or can be a separate application on the same data processing system as a publisher application. In cases where there is inter-system communication, this can be performed over network 220, which can be any combination of public or private networks, including the Internet.

Figure 3 illustrates aprocess 300 in accordance with disclosed embodiments, as performed by one or more publisher systems and a subscriber system. The publisher "systems" and subscriber "system," can, in some cases, be separate applications or application instances on the same physical system. The publisher systems and subscriber systems can be implemented, for example, as a risk manager 154, an external system 170, any other device or system as described above, or in other data processing system(s).

A publisher system maintains a data table 208 that is defined with columns that are based on integer-derived data types acting as primary keys (PK-i) (302).

For each data table 208 (T1, T2, Tn) in each publisher system (202, 204, 206), if the columns of the table are defined with an identity attribute applied, the publisher system removes the identity attribute designation from the column (304).

Each publisher system adds a column (PK-g) to each of the data tables such that every record in every table for a particular publisher system contains a single common value for PK-g which is unique across all publisher systems (306). For example, the PK-g for each table is unique across all existing application instances and is effectively unique across all future instances of the application instances that may participate in the data replication process.

PK-i and PK-g, taken together, uniquely identify records across all publishers for a given table (when examined at the subscriber). In various embodiments, each data table is "self-identifying" in that it exists and is permanently located in every publisher and subscriber. Only the data records are moved between subscribers and publishers and therefore, disclosed embodiments enable the data records to be uniquely identifiable from the multiple publisher systems without range management.

Each publisher system defines a new primary key (PK) for each of the data tables that is comprised of the two columns PK-i and PK-g (308). For example, the Table 1 (T1) from publisher system P1 has a PK that is different and range-independent of corresponding tables T1 from the other publisher systems.

Each publisher system sets a unique value for PK-i for any records added to a data table (310). The unique value for PK-i is within the scope of the corresponding containing table. This can be accomplished, for example, using a trigger on the table to updating the PK-i values when new data is received.

Each publisher system publishes the data from the data tables to one or more subscriber systems (312). By including the unique primary key PK (determined by the PK-I and unique PK-g on each publisher system) all data records from all replicating tables from all existing and all future publisher systems can do so without any regard to range management and with the full complement of unique values afforded by the specified integer-derived data type selected for PK-i, available to each replicating table in each publisher system.

Each subscriber system 210 accumulates the published data in combined tables 212, using the respective PK identifiers to uniquely identify the table data from the respective publisher systems.

## Claims

1. A method comprising:
maintaining (302), by a publisher system (202), a data table (208) associated with a primary key PK-i;
adding (306), by the publisher system (202), a unique value PK-g associated with every record of the data table (208);
defining (308), by the publisher system (202), a primary key PK based on PK-i and PK-g; and
publishing (312) records from the data table (208), including the primary key PK, by the publisher system (202), to at least one subscriber system,
wherein PK-g uniquely identifies the publisher system (202) in the published records.

2. The method of claim 1, wherein the publisher system (202) includes multiple data tables (208), each data table (208) associated with a different primary key PK-i and every record in every table (208) is associated with the same unique value PK-g.

3. The method of claim 1, wherein multiple publisher systems (202, 204, 206) each maintain a data table (208) associated with the primary key PK-i, and add different unique values PK-g.

4. The method of claim 1, wherein PK-i and PK-g are maintained as columns in the data table (208).

5. The method of claim 1, wherein the primary key PK-i is an integer-derived data type.

6. The method of claim 1, wherein the publisher system (202) removes (304) any identity attribute associated with the data table (208).

7. A publisher system comprising:
a controller; and
a memory, the controller configured to:
maintain a data table associated with a primary key PK-i;
add a unique value PK-g associated with every record of the data table;
define a primary key PK based on PK-i and PK-g; and
records from the data table, including the primary key PK to at least one subscriber system,
wherein PK-g uniquely identifies the publisher system in the published records.

8. The publisher system of claim 7, wherein the publisher system includes multiple data tables, each data table associated with a different primary key PK-i and every record in every table is associated with the same unique value PK-g.

9. The publisher system of claim 7, wherein multiple publisher systems each maintain a data table associated with the primary key PK-i, and add different unique values PK-g.

10. The publisher system of claim 7, wherein PK-i and PK-g are maintained as columns in the data table.

11. The publisher system of claim 7, wherein the primary key PK-i is an integer-derived data type.

12. The publisher system of claim 7, wherein the publisher system removes any identity attribute associated with the data table.

13. A non-transitory machine-readable medium encoded with executable instructions that, when executed, cause one or more processors (156) of a publisher system (202) to perform a process as in any of claim 1 - 6.

## Patentansprüche

1. Verfahren, umfassend:
Führen (302) einer Datentabelle (208), der ein Primärschlüssel PK-i zugeordnet ist, durch ein Herausgebersystem (202);
Hinzufügen (306) eines eindeutigen Wertes PK-g, der jedem Datensatz der Datentabelle (208) zugeordnet ist, durch das Herausgebersystem (202);
Definieren (308) eines Primärschlüssels PK auf der Grundlage von PK-i und PK-g durch das Herausgebersystem (202); und
Veröffentlichen (312) von Datensätzen aus der Datentabelle (208) einschließlich des Primärschlüssels PK durch das Herausgebersystem (202) bei mindestens einem Teilnehmersystem,
wobei PK-g das Herausgebersystem (202) in den veröffentlichten Datensätzen eindeutig identifiziert.

2. Verfahren nach Anspruch 1, wobei das Herausgebersystem (202) mehrere Datentabellen (208) einschließt, wobei jeder Datentabelle (208) ein anderer Primärschlüssel PK-i zugeordnet ist und jedem Datensatz in jeder Tabelle (208) derselbe eindeutige Wert PKg zugeordnet ist.

3. Verfahren nach Anspruch 1, wobei mehrere Herausgebersysteme (202, 204, 206) jeweils eine Datentabelle (208) führen, der der Primärschlüssel PK-i zugeordnet ist, und unterschiedliche eindeutige Werte PK-g hinzufügen.

4. Verfahren nach Anspruch 1, wobei PK-i und PK-g als Spalten in der Datentabelle (208) geführt werden.

5. Verfahren nach Anspruch 1, wobei der Primärschlüssel PK-i ein von einer Ganzzahl abgeleiteter Datentyp ist.

6. Verfahren nach Anspruch 1, wobei das Herausgebersystem (202) beliebige der Datentabelle (208) zugeordnete Identitätsattribute entfernt (304).

7. Herausgebersystem, umfassend:
eine Steuereinheit; und
einen Speicher, wobei die Steuereinheit konfiguriert ist zum:
Führen einer Datentabelle, der ein Primärschlüssel PK-i zugeordnet ist;
Hinzufügen eines eindeutigen Wertes PK-g, der jedem Datensatz der Datentabelle zugeordnet ist;
Definieren eines Primärschlüssels PK auf der Grundlage von PK-i und PK-g; und
Datensätze aus der Datentabelle einschließlich des Primärschlüssels PK an mindestens ein Teilnehmersystem,
wobei PK-g das Herausgebersystem in den veröffentlichten Datensätzen eindeutig identifiziert.

8. Herausgebersystem nach Anspruch 7, wobei das Herausgebersystem mehrere Datentabellen einschließt, wobei jeder Datentabelle ein anderer Primärschlüssel PK-i zugeordnet ist und jedem Datensatz in jeder Tabelle derselbe eindeutige Wert PK-g zugeordnet ist.

9. Herausgebersystem nach Anspruch 7, wobei mehrere Herausgebersysteme jeweils eine Datentabelle führen, der der Primärschlüssel PK-i zugeordnet ist, und unterschiedliche eindeutige Werte PK-g hinzufügen.

10. Herausgebersystem nach Anspruch 7, wobei PK-i und PK-g als Spalten in der Datentabelle geführt werden.

11. Herausgebersystem nach Anspruch 7, wobei der Primärschlüssel PK-i ein von einer Ganzzahl abgeleiteter Datentyp ist.

12. Herausgebersystem nach Anspruch 7, wobei das Herausgebersystem beliebige der Datentabelle zugeordnete Identitätsattribute entfernt.

13. Nichtflüchtiges, maschinenlesbares Medium, das mit ausführbaren Anweisungen codiert ist, die bei Ausführung einen oder mehrere Prozessoren (156) eines Herausgebersystems (202) veranlassen, einen Prozess nach einem der Ansprüche 1 bis 6 durchzuführen.

## Revendications

1. Procédé comprenant :
la mise à jour (302), par un système de publication (202), d'une table de données (208) associée à une clé primaire PK-i ;
l'ajout (306), par le système de publication (202), d'une valeur unique PK-g associée à chaque enregistrement de la table de données (208) ;
la définition (308), par le système de publication (202), d'une clé primaire PK basée sur les PK-i et PK-g ; et
la publication (312) des enregistrements de la table de données (208), y compris la clé primaire PK, par le système de publication (202), à au moins un système d'abonné,
dans lequel la PK-g identifie de manière unique le système de publication (202) dans les enregistrements publiés.

2. Procédé selon la revendication 1, dans lequel le système de publication (202) comprend plusieurs tables de données (208), chaque table de données (208) étant associée à une clé primaire PK-i différente et chaque enregistrement dans chaque table (208) étant associé à la même valeur unique PK-g.

3. Procédé selon la revendication 1, dans lequel plusieurs systèmes de publication (202, 204, 206) mettent respectivement à jour une table de données (208) associée à la clé primaire PK-i, et ajoutent différentes valeurs uniques PK-g.

4. Procédé selon la revendication 1, dans lequel les PK-i et PK-g sont mises à jour sous forme de colonnes dans la table de données (208).

5. Procédé selon la revendication 1, dans lequel la clé primaire PK-i est un type de données dérivé d'entiers.

6. Procédé selon la revendication 1, dans lequel le système de publication (202) supprime (304) tout attribut d'identité associé à la table de données (208).

7. Système de publication comprenant :
un contrôleur ; et
une mémoire, le contrôleur étant configuré :
pour mettre à jour une table de données associée à une clé primaire PK-i ;
pour ajouter une valeur unique PK-g associée à chaque enregistrement de la table de données ;
pour définir une clé primaire PK basée sur les PK-i et PK-g ; et
des enregistrements de la table de données, comprenant la clé primaire PK à au moins un système d'abonné,
dans lequel la PK-g identifie de manière unique le système de publication dans les enregistrements publiés.

8. Système de publication selon la revendication 7, dans lequel le système de publication comprend plusieurs tables de données, chaque table de données étant associée à une clé primaire PK-i différente et chaque enregistrement dans chaque table étant associé à la même valeur unique PK-g.

9. Système de publication selon la revendication 7, dans lequel de multiples systèmes de publication mettent respectivement à jour une table de données associée à la clé primaire PK-i, et ajoutent différentes valeurs uniques PK-g.

10. Système de publication selon la revendication 7, dans lequel les PK-i et PK-g sont mises à jour sous forme de colonnes dans la table de données.

11. Système de publication selon la revendication 7, dans lequel la clé primaire PK-i est un type de données dérivé d'entiers.

12. Système de publication selon la revendication 7, dans lequel le système de publication supprime tout attribut d'identité associé à la table de données.

13. Support non transitoire lisible par machine codé avec des instructions exécutables, lesquelles, lorsqu'elles sont exécutées, amènent au moins un processeur (156) d'un système de publication (202) à mettre en œuvre un procédé selon l'une quelconque des revendications 1 à 6.
